# EUROPÄISCHE PATENTANMELDUNG

(11) **EP 3 098 676 A1**
(43) Veröffentlichungstag der Anmeldung: **30.11.2016**
(21) Anmeldenummer: 16171658.4
(22) Anmeldetag: 27.05.2016
(51) Int. Cl.: G05B 19/4093

(54) **VERFAHREN ZUR WERKZEUGSUBSTITUTION**

(30) Priorität: 29.05.2015 DE 102015108535
(71) Anmelder: Kaltenbach GmbH + Co. KG, 79539 Lörrach (DE)
(72) Erfinder: LIEBSCHER, Erik, 79713 Bad Säckingen (DE)
(74) Vertreter: Maucher Jenkins Patent- und Rechtsanwälte

(57) **Zusammenfassung**

Die Erfindung betrifft ein Verfahren zur Steuerung einer Werkzeugmaschine mittels einer Steuerungseinrichtung, wobei die Werkzeugmaschine mehrere unterschiedliche Werkzeuge aufweist, das Verfahren umfassend: Empfangen, durch die Steuerungseinrichtung, einer ersten Anweisung zur Durchführung mindestens einer Bearbeitung des Werkstücks mit mindestens einem ersten der mehreren unterschiedlichen Werkzeuge; Bestimmen, durch die Steuerungseinrichtung, einer zweiten Anweisung zur Durchführung der Bearbeitung des Werkstücks mit mindestens einem zweiten der mehreren unterschiedlichen Werkzeuge; und Ersetzen, durch die Steuerungseinrichtung, der ersten Anweisung durch die zweite Anweisung zur Durchführung der Bearbeitung mit dem zweiten Werkzeug anstatt dem ersten Werkzeug.

## Beschreibung

### Gebiet der Erfindung

Die Erfindung betrifft ein Verfahren zur Steuerung einer Werkzeugmaschine mittels einer Steuerungseinrichtung, wobei die Werkzeugmaschine mehrere unterschiedliche Werkzeuge aufweist.

### Hintergrund

Aus DE 10 2009 025 167 B3 ist eine Software zur Überwachung und Steuerung eines Fertigungsprozesses und zur Steuerung einer Werkzeugmaschine bekannt, die es ermöglicht, die Maschine anhand einer vorprogrammierten Ablaufsequenz arbeiten zu lassen und die Prozessvariablen jeweils mittels eines stochastischen Verfahrens zu optimieren.

Aus DE 2007 016 234 A1 ist bekannt, eine Maschine mit mehreren Werkzeugen so zu steuern, dass im Zuge komplexer Bearbeitungsschritte die Wechselzeiten beim Werkzeugwechsel innerhalb eines Werkzeugmagazins minimiert werden.

Allgemein liegt derartigen Vorrichtungen und Verfahren das Bestreben zugrunde, die Arbeitsvorgänge an einer Werkzeugmaschine effizient zu gestalten und die Maschine optimal auszulasten.

Die Verfahren aus dem Stand der Technik haben jedoch zum Nachteil, dass sie sich zur Regelung der Maschinensteuerung vorgelagerter CAM-Programme bedienen, die während einer Maschinenlaufzeit nicht zur Verfügung stehen. Sie sind als halbautomatisch zu betrachten, da sie letztlich immer den Eingriff eines Menschen erfordern. Weiterhin setzt der Stand der Technik in jedem Fall voraus, dass der Maschine die vom Benutzer oder CAM-Programmierer vorgesehenen Bearbeitungen (Werkzeuge) auch tatsächlich zur Verfügung stehen. Ist dies nicht der Fall, kann die Maschine das Programm nicht korrekt abarbeiten. Vom vorgegebenen Programm abweichende Rahmenbedingungen (z.B. fehlendes Werkzeug) können von Steuereinrichtungen aus dem Stand der Technik nicht kompensiert werden und führen unweigerlich zum Abbruch des Programms.

Ziel der vorliegenden Erfindung ist es, die Automatisierung und Auslastung von Werkzeugmaschinen weiter zu verbessern.

### Kurzbeschreibung der Erfindung

Diese Aufgabe wird durch die in den unabhängigen Ansprüchen angegebene Erfindung gelöst. Vorteilhafte Ausgestaltungen sind in den Unteransprüchen gegeben.

Erfindungsgemäß ist ein Verfahren zur Steuerung einer Werkzeugmaschine mittels einer Steuerungseinrichtung geschaffen, wobei die Werkzeugmaschine mehrere unterschiedliche Werkzeuge aufweist, das Verfahren umfassend: Empfangen, durch die Steuerungseinrichtung, einer ersten Anweisung zur Durchführung mindestens einer Bearbeitung des Werkstücks mit mindestens einem ersten von mehreren unterschiedlichen Werkzeugen; Bestimmen, durch die Steuerungseinrichtung, einer zweiten Anweisung zur Durchführung der Bearbeitung des Werkstücks mit mindestens einem zweiten der mehreren unterschiedlichen Werkzeuge; und Ersetzen, durch die Steuerungseinrichtung, der ersten Anweisung durch die zweite Anweisung zur Durchführung der Bearbeitung mit dem zweiten Werkzeug anstatt dem ersten Werkzeug, umfasst.

Somit ist ein Verfahren geschaffen, das eine bevorzugte Bearbeitung oder Bearbeitungssequenz in Form einer ersten Anweisung oder eines Satzes von Anweisungen, komplett oder teilweise durch einen alternativen (zweiten) Anweisungssatz ersetzt. Dabei weicht ein Endergebnis bzw. eine Zielgeometrie des Werkstückes nicht, oder nur in engen, tolerierbaren Grenzen von einer Ausgangsgeometrie (Vorgabeparameter) ab.

Ein wesentlicher Vorteil des Verfahrens liegt darin, dass freie Kapazitäten an Bearbeitungseinrichtungen der Werkzeugmaschine genutzt werden können. Die vorgesehene Bearbeitung wird dann durch mindestens ein anderes, nämlich freies, ursprünglich nicht für die Bearbeitung vorgesehenes Werkzeug durchgeführt.

Auf diese Weise kann die Gesamtdurchlaufzeit eines Werkstückes durch eine Werkzeugmaschine verkürzt werden.

Die hierbei erfolgende Werkzeugsubstitution kann automatisch, d.h. ohne Eingriff eines Benutzers, erfolgen. Insbesondere kann die Werkzeugsubstitution automatisch durch die Steuerungseinrichtung der Werkzeugmaschine veranlasst werden.

Die Werkzeugmaschine kann mehrere Bearbeitungseinrichtungen mit jeweils mehreren (unterschiedlichen) Werkzeugen aufweisen. Ein freies Werkzeug oder eine freie Bearbeitungseinrichtung kann die Durchführung einer geplanten Bearbeitung übernehmen, wenn das eigentlich dafür vorgesehene Werkzeug oder die eigentlich dafür vorgesehene Bearbeitungseinrichtung ausgelastet ist. Dabei kann die Bearbeitung durch ein anderes Werkzeug an der selben Bearbeitungseinrichtung oder durch das gleiche Werkzeug an einer anderen Bearbeitungseinrichtung durchgeführt werden. Mit anderen Worten kann das Werkzeug, aber auch das Verfahren zur Durchführung der Bearbeitung, substituiert werden.

Die Steuereinrichtung kann hierzu zunächst die Daten und Parameter (erste Anweisung) empfangen, die ein Bediener oder Benutzer vor der Maschinenlaufzeit eingegeben haben kann, und extrahiert, beispielsweise aus CNC-Daten, Informationen über die Zielgeometrie des zu bearbeitenden Werkstückes und die dafür vorgesehenen Bearbeitungsschritte. Die Steuerungseinrichtung kann dann zu jedem vorgesehenen Bearbeitungsschritt eine oder mehrere alternative Bearbeitungsschritte vorsehen. Die Grundlage dieser Bestimmung kann eine Datenbank bilden, in der Daten bzw. Paramater bezüglich aller verfügbaren Werkzeuge und Bearbeitungen und deren Charakteristiken (Substitutionsdaten) gespeichert sind. Die Daten in dieser Datenbank können anhand von Ähnlichkeitsparametern oder anderer Kriterien verknüpft sein. Diese Daten ermöglichen die Substitution eines vorgesehenen Bearbeitungsschrittes durch einen alternativen Bearbeitungsschritt. Es stehen somit in der Datenbank für jede Bearbeitung verschiedene mögliche Bearbeitungsschritte zur Verfügung. Zum Beispiel kann die vorgesehene Bearbeitung das Herstellen eines Loches sein. Diese Bearbeitung kann durch Bohren mit einem Bohrer, oder alternativ durch Brennen mit einem Laser durchgeführt werden. Diese Alternativen können dazu genutzt werden, freie Kapazitäten zu nutzen. Auf diese Weise kann die Auslastung der Werkzeugmaschine insgesamt erhöht werden.

Somit wird ermöglicht, geplante Bearbeitungen mit alternativen Werkzeugen oder Herstellungsverfahren auszuführen, während die ursprünglich dafür vorgesehenen Werkzeuge bzw. Verfahren nicht zur Verfügung stehen. Somit muss der Programmablauf nicht unterbrochen werden, wenn ein eigentlich zur Durchführung des nächsten Arbeitsschrittes vorgesehenes Werkzeug oder Verfahren gerade nicht zur Verfügung steht. Als Folge dessen können die verfügbaren Bearbeitungseinrichtungen besser ausgelastet werden.

In einer Ausgestaltung der Erfindung werden alle Schritte des erfindungsgemäßen Verfahrens, zumindest aber die Schritte des Bestimmens der zweiten Anweisung und des Ersetzens der ersten Anweisung durch die zweite Anweisung während der Laufzeit der Werkzeugmaschine (Maschinenlaufzeit), insbesondere während der Bearbeitung eines Werkstückes durch die Werkzeugmaschine, durchgeführt. Es ist somit während des laufenden Betriebs der Werkzeugmaschine möglich, Leerläufe einzelner Werkzeuge und/oder Bearbeitungseinrichtungen zu vermeiden oder vermindern.

In einer Ausgestaltung der Erfindung sind die ersten und zweiten Werkzeuge an verschiedenen Bearbeitungseinrichtungen der Werkzeugmaschine angeordnet. Es ist somit möglich, Substitutionen nicht nur innerhalb einer Bearbeitungseinrichtung durchzuführen, sondern auch Arbeitsschritte an andere Bearbeitungseinrichtungen zu delegieren, die gerade frei sind.

In einer weiteren Ausgestaltung der Erfindung sind die ersten und zweiten Werkzeuge Werkzeuge unterschiedlicher Gattungen. Werkzeuge, die zur Durchführung derselben Bearbeitung geeignet, aber unterschiedlicher Gattung sind, sind beispielsweise Sägen einerseits und Brennschneider andererseits (Bearbeitung = Ablängen). Auf diese Weise werden die Substitutionsmöglichkeiten erheblich erweitert.

In einer Ausgestaltung der Erfindung entspricht die Bearbeitung durch das zweite Werkzeug einem anderen Bearbeitungsverfahren, als die Bearbeitung durch das erste Werkzeug. Beispielsweise kann die Herstellung eines Loches anstatt durch Bohren durch Brennschneiden oder Lasern durchgeführt werden. Hieraus ergeben sich weitere Substitutionsmöglichkeiten.

In einer Ausgestaltung der Erfindung ist die Bearbeitung, insbesondere die Geometrie des durch die Bearbeitung herzustellenden Ergebnisses, durch einen oder mehrere Parameter definiert, die sowohl bei Durchführung der Bearbeitung durch das erste Werkzeug als auch bei Durchführung der Bearbeitung durch das zweite Werkzeug eingehalten werden, oder die nur innerhalb von vorgegebenen Toleranzen voneinander abweichen. Zur Überprüfung, ob eine Bearbeitung mit dem zweiten Werkzeug der vorgegebenen Geometrie und/oder Toleranz entspricht, kann die Steuerungseinrichtung zur Abfrage von vorgegebenen Informationen in einer Datenbank ausgebildet sein.

In einer Ausgestaltung der Erfindung umfasst das Verfahren das Abrufen von Daten aus einer Datenbank, durch welche Daten die Bearbeitung mehreren unterschiedlichen Werkzeugen zugeordnet ist. In der Datenbank können bereits alle Verknüpfungen zwischen den Werkzeugen und Bearbeitungen, die an der Werkzeugmaschine zur Verfügung stehen, hinterlegt sein. Dabei können nicht nur technische, sondern auch rechtliche Erwägungen in die Verknüpfung einfließen. Beispielsweise ist in bestimmten Ländern eine Substitution von Bohren durch Stanzen oder Brennschneiden nicht gestattet. Die Datenbank kann zudem Angaben über Fertigungstoleranzen, Bearbeitungszeiten usw. enthalten. Das Substitutionsspektrum kann nutzerseitig durch Vorgaben bezüglich der Fertigungstoleranzen parametriert werden kann. Es kann eine genaue Abwägung zwischen Produktqualität und Herstellkosten erfolgen.

In einer weiteren Ausgestaltung der Erfindung sind die ersten und zweiten Werkzeuge Werkzeuge der gleichen Gattung. Zum Beispiel kann der Einsatz eines Werkzeuges der gleichen Gattung den Ersatz eines Fräsers mit einem ersten Durchmesser durch einen anderen Fräser mit einem anderen Durchmesser umfassen.

In einer Ausgestaltung der Erfindung umfasst die Bearbeitung mit dem mindestens einen ersten Werkzeug mehrere Arbeitsschritte, und die Bearbeitung mit dem mindestens einen zweiten Werkzeug davon unterschiedliche Arbeitsschritte und/oder Arbeitsschritte in einer davon unterschiedlichen Reihenfolge. In dieser Ausgestaltung kann der Herstellungsprozess teilweise oder komplett substituiert werden.

In einer weiteren Ausgestaltung der Erfindung umfasst das Verfahren das Ersetzen und/oder Zusammenfassen mehrerer, während der Bearbeitung durchzuführender Arbeitsschritte. Somit kann die Bearbeitungszeit verkürzt werden.

Erfindungsgemäß ist außerdem eine Steuerungseinrichtung für eine Werkzeugmaschine geschaffen, die zur Durchführung des erfindungsgemäßen Verfahrens eingerichtet oder programmiert ist. Das Verfahren kann auf diese Weise durch die Steuereinrichtung automatisch durchgeführt werden.

Erfindungsgemäß ist weiterhin ein Computerprogramm geschaffen, umfassend maschinenlesbare Befehle, die bei Ausführung durch eine computerimplementierte Steuerungseinrichtung die Ausführung des erfindungsgemäßen Verfahrens veranlassen.

Beispielsweise kann die erste Anweisung durch CNC-Code gebildet sein, der z.B. durch die Steuerungsvorrichtung der Werkzeugmaschine analysiert und verändert oder zumindest teilweise ersetzt wird. Der veränderte oder neue CNC-Code wird anschließend zur Durchführung der vorgesehenen Bearbeitung verwendet. Dies kann automatisch auch während der Laufzeit der Werkzeugmaschine erfolgen.

Ein Vorteil dieser Implementierung besteht darin, dass Kompatibilität zu bestehenden Werkzeugmaschinen besteht. Beispielsweise kann der CNC-Code auch außerhalb der Werkzeugmaschine erzeugt und anschließend der Steuerungseinrichtung der Werkzeugmaschine zugeführt werden.

Erfindungsgemäß ist zudem eine Werkzeugmaschine geschaffen, umfassend mindestens erste und zweite unterschiedliche Werkzeuge zur Bearbeitung eines Werkstückes, insbesondere eines Profilträgers, und eine Steuerungseinrichtung zur Steuerung der Bearbeitung des Werkstückes durch die Werkzeugmaschine gemäß dem erfindungsgemäßen Verfahren. Die ersten und zweiten Werkzeuge können an unterschiedlichen Bearbeitungseinrichtungen angeordnet sein. Die ersten und zweiten Werkzeuge, und insbesondere die Bearbeitungseinrichtungen können relativ zueinander beweglich sind. Eine derartige Werkzeugmaschine gestattet eine flexible Bearbeitung eines Werkstücks, wobei der Ablauf der einzelnen Bearbeitungsschritte während der Laufzeit der Werkzeugmaschine automatisch anpassbar ist.

### Kurzbeschreibung der Zeichnungen

Nachfolgend wird eine beispielhafte Ausgestaltung der Erfindung anhand der beigefügten Zeichnung beschrieben. Es zeigt:

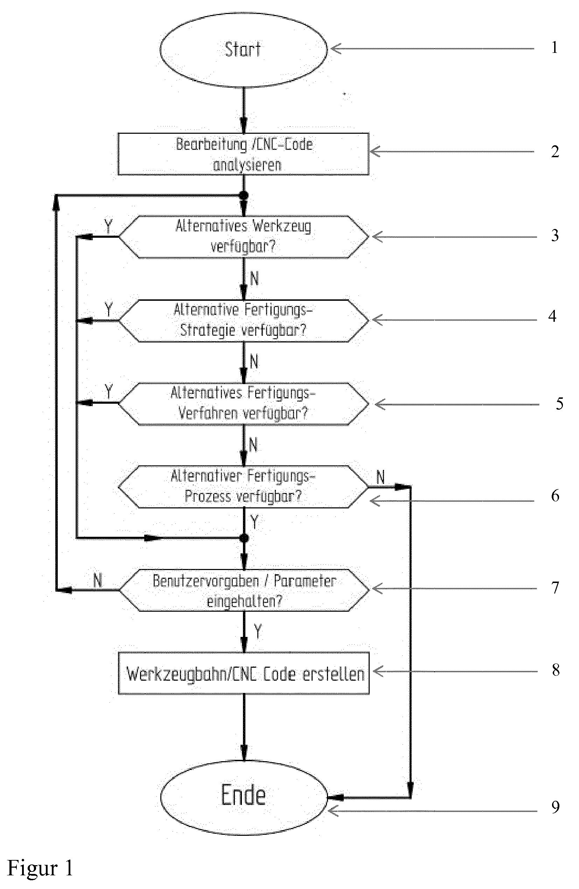

Figur 1 ein schematisches Ablaufdiagramm einer bespielhaften Implementierungsform der Erfindung.

### Beschreibung der Erfindung anhand einer beispielhaften Implementierungsform

Figur 1 zeigt ein Ablaufdiagramm einer beispielhaften Implementierungsform des erfindungsgemäßen Verfahrens.

Mit dem Start 1 des Programmablaufes empfängt eine Steuerungseinrichtung einer Werkzeugmaschine zunächst eine erste Anweisung, insbesondere einen CNC-Code. Der CNC-Code stellt die herzustellenden Bearbeitungen dar.

In einem anschließenden Schritt 2 analysiert die Steuerungseinrichtung den CNC-Code und bestimmt eine Reihenfolge von Bearbeitungsschritten.

In Schritt 3 prüft die Steuerungsvorrichtung, ob für die herzustellenden Bearbeitungen alternative Werkzeuge verfügbar sind.

Ist kein alternatives Werkzeug verfügbar, so wird in Schritt 4 geprüft, ob eine alternative Fertigungsstrategie verfügbar ist.

Ist keine alternative Fertigungsstrategie verfügbar, so wird in Schritt 5 geprüft, ob ein alternatives Fertigungsverfahren verfügbar ist.

Ist auch kein alternatives Fertigungsverfahren verfügbar, so wird in Schritt 6 geprüft, ob ein alternativer Fertigungsprozess verfügbar ist.

Ist auch kein alternativer Fertigungsprozess verfügbar, so wird das Verfahren in Schritt 9 beendet.

Ist in den Schritten 3, 4, 5 oder 6 eine Alternative verfügbar, so wird das Verfahren in Schritt 7 fortgesetzt. In Schritt 7 prüft die Steuerungsvorrichtung, ob die verfügbare Alternative den Benutzervorgaben bzw. vorgegebenen Parametern entspricht. Ist dies der Fall, so wird in Schritt 8 neuer CNC-Code erstellt. Anderenfalls kehrt das Verfahren zurück zu Schritt 3.

Die Analyse des CNC-Codes in Schritt 2 umfasst ein Empfangen und Aufbereiten nutzerseitig vorgegebener Bearbeitungsdaten. Insbesondere enthält der CNC-Code Informationen über die Geometrie des herzustellenden Werkstückes, die Art, Dauer, und/oder Reihenfolge der Bearbeitungen, die zu verwendenden Werkzeuge, und/oder mögliche Toleranzen.

Das Bestimmen eines alternativen Werkzeugs in Schritt 3 ist beispielsweise das Bestimmen eines Werkzeugs der gleichen oder einer ähnlichen Gattung, das auf der gleichen Bearbeitungseinrichtung angeordnet ist. Unterschiede zwischen dem alternativen Werkzeug und dem ursprünglichen Werkzeug sind durch Werkzeugparameter (zum Beispiel Drehzahl, Vorschub, etc.) dargestellt. Zum Beispiel kann in diesem Schritt die Verfügbarkeit eines Fräsers bestimmt werden, der einen anderen Durchmesser und/oder eine andere Geometrie aufweist, als der ursprünglich vorgesehene, zu ersetzende Fräser.

Eine alternative Fertigungsstrategie in Schritt 4 ist beispielsweise dadurch gegeben, dass bei der Bearbeitung ein Werkzeug und/oder Fertigungsverfahren der gleichen Gattung durch eines oder mehrere Werkzeuge und/oder Fertigungsverfahren der gleichen oder einer ähnlichen Gattung ersetzt oder ergänzt wird. Die alternative Fertigungsstrategie kann den Einsatz der ursprünglich vorgesehenen oder einer anderen Bearbeitungseinrichtung umfassen. Zum Beispiel kann in der alternativen Fertigungsstrategie Bohren durch Zirkularfräsen oder Vorbohren und Auffräsen ersetzt werden.

Ein alternatives Fertigungsverfahren in Schritt 5 ist beispielsweise dadurch gegeben, dass die vorgesehenen Bearbeitungsschritte durch eine oder mehrere Bearbeitungsschritte ersetzt bzw. ergänzt werden, wobei mindestens einer der Bearbeitungsschritte einer anderen Gattung zugeordnet ist, als die ursprünglich vorgesehenen Bearbeitungsschritte. Insbesondere wird in diesem Fall wird der Einsatz mindestens einer weiteren Bearbeitungseinrichtung vorgesehen. Beispielsweise kann Durchbohren durch Brennschneiden oder Lasern ersetzt werden.

Ein alternativer Fertigungsprozess in Schritt 6 sieht vor, dass mindestens ein Verfahren einer übergeordneten Gattung angewendet wird. Auch in diesem Fall ist der Einsatz mindestens einer weiteren Bearbeitungseinrichtung vorgesehen. Zum Beispiel kann die ursprünglich vorgesehene Herstellung einer Bearbeitung durch Zerspanen durch eine adaptive Fertigung ersetzt oder ergänzt werden.

Die erfindungsgemäße Software kann derart ausgestaltet sein, dass vor oder während einer Maschinenlaufzeit eine vorgegebenen erste Anweisung zur Herstellung einer Bearbeitung (z.B. Bohrung, Fräsen) oder Bearbeitungssequenz (z.B. Mehrfachschnitte, Vorbohren und Gewindeschneiden, Stufenbohren, Scheren und Stanzen) durch eine andere (zweite) Anweisung oder Bearbeitungssequenz komplett oder teilweise ersetzt wird. Das Endergebnis bzw. die entstehende Kontur/Geometrie ist dabei identisch mit der Ausgangsgeometrie (dem vorgegebenen Ergebnis) oder weicht nur in vorgegebenen Grenzen (Toleranz, Oberflächengüte) davon ab. Eine Steigerung der Zeit und/oder Kosten für die Herstellung der Bearbeitung kann sogar in Kauf genommen werden, beispielsweise wenn dadurch die Auslastung der Werkzeugmaschine insgesamt verbessert wird. Toleranzen können durch den Bediener parametriert werden.

Eine komplette Substitution sieht vor, dass ein erstes Werkzeug oder ein Verfahren oder eine Bearbeitungseinrichtung anschließend nicht mehr eingesetzt wird. Eine teilweise Substitution sieht vor, dass ein erstes Werkzeug in einem Bearbeitungsschritt noch zum Einsatz kommt, dieser aber durch vor- und/oder nachgelagerte Bearbeitungsschritte ergänzt wird. Der mögliche Umfang der Substitution reicht somit von einfacher Werkzeugsubstitution bis zum Ersetzen ganzer Arbeitsgänge oder Bearbeitungseinrichtungen.

Der Einsatz der Software ist insbesondere im Bereich der sogenannten 2-, 2.5-und 3-Achs-Bearbeitung von Vorteil, ist aber nicht darauf beschränkt. Vielmehr ist auch ein Einsatz im Bereich der 4-, 5-, oder 6-Achs-Bearbeitung und der adaptiven Fertigung möglich.

Neben einer geometrischen/technischen Realisierbarkeit kann die Software weitere Einschränkungen berücksichtigen, wie z.B. gesetzliche Vorgaben: so ist eine Substitution von Bohren durch Stanzen oder Brennschneiden im deutschen Stahlbau nicht zulässig; in Südamerika bestehen derartige Restriktionen nicht. Weiterhin ist eine Aufteilung oder Zusammenführung von Arbeitsgängen möglich; z.B. können Schruppen und Schlichten durch das Fräsen in einem Zug mit dem passenden Werkzeug ersetzt werden.

Die vorliegende Erfindung eignet sich insbesondere für Werkzeugmaschinen mit mehreren Bearbeitungseinrichtungen, die relativ zueinander beweglich sein können, und die jeweils mehrere gleiche oder unterschiedliche Werkzeuge aufweisen. Bei derartigen Werkzeugmaschinen gibt es viele Freiheitsgrade und ein hohes Maß an Flexibilität im Hinblick auf die Art und Reihenfolge der durchzuführenden Bearbeitungsschritte. Diese Freiheitsgrade und Flexibilität macht sich die vorliegende Erfindung zu Nutze.

## Patentansprüche

1. Verfahren zur Steuerung einer Werkzeugmaschine mittels einer Steuerungseinrichtung, wobei die Werkzeugmaschine mehrere unterschiedliche Werkzeuge aufweist, das Verfahren umfassend:
Empfangen, durch die Steuerungseinrichtung, einer ersten Anweisung zur Durchführung mindestens einer Bearbeitung des Werkstücks mit mindestens einem ersten der mehreren unterschiedlichen Werkzeuge;
Bestimmen, durch die Steuerungseinrichtung, einer zweiten Anweisung zur Durchführung der Bearbeitung des Werkstücks mit mindestens einem zweiten der mehreren unterschiedlichen Werkzeuge; und
Ersetzen, durch die Steuerungseinrichtung, der ersten Anweisung durch die zweite Anweisung zur Durchführung der Bearbeitung mit dem zweiten Werkzeug anstatt dem ersten Werkzeug.

2. Verfahren nach Anspruch 1, wobei zumindest die Schritte des Bestimmens und Ersetzens während der Laufzeit der Werkzeugmaschine, insbesondere während der Bearbeitung eines Werkstückes durch die Werkzeugmaschine, durchgeführt werden.

3. Verfahren nach Anspruch 1 oder 2, wobei die ersten und zweiten Werkzeuge an verschiedenen Bearbeitungseinrichtungen der Werkzeugmaschine angeordnet sind.

4. Verfahren nach einem der vorhergehenden Ansprüche, wobei die ersten und zweiten Werkzeuge Werkzeuge einer unterschiedlichen Gattung sind.

5. Verfahren nach einem der vorhergehenden Ansprüche, wobei die Bearbeitung durch das zweite Werkzeug einem anderen Bearbeitungsverfahren entspricht, als die Bearbeitung durch das erste Werkzeug.

6. Verfahren nach Anspruch 5, wobei die Bearbeitung, insbesondere die Geometrie des durch die Bearbeitung herzustellenden Ergebnisses, durch einen oder mehrere Parameter definiert ist, die sowohl bei Durchführung der Bearbeitung durch das erste Werkzeug als auch bei Durchführung der Bearbeitung durch das zweite Werkzeug eingehalten werden, oder die nur innerhalb von vorbestimmten Toleranzen voneinander abweichen.

7. Verfahren nach Anspruch 6, umfassend das Abrufen von Daten aus einer Datenbank, durch welche Daten die Bearbeitung mehreren unterschiedlichen Werkzeugen zugeordnet ist.

8. Verfahren nach Anspruch 3, wobei die ersten und zweiten Werkzeuge Werkzeuge der gleichen Gattung sind.

9. Verfahren nach einem der vorhergehenden Ansprüche, wobei die Bearbeitung mit dem mindestens einen ersten Werkzeug mehrere Arbeitsschritte umfasst, und die Bearbeitung mit dem mindestens einen zweiten Werkzeug davon unterschiedliche Arbeitsschritte oder Arbeitsschritte in einer davon unterschiedlichen Reihenfolge umfasst.

10. Verfahren nach einem der vorhergehenden Ansprüche, umfassend das Ersetzen und/oder Zusammenfassen mehrerer während der Bearbeitung durchzuführenden Arbeitsschritte.

11. Steuerungseinrichtung für eine Werkzeugmaschine, eingerichtet oder programmiert zur Durchführung eines Verfahrens nach einem der Ansprüche 1 bis 10.

12. Computerprogramm, umfassend maschinenlesbare Befehle, die bei Ausführung durch eine computerimplementierte Steuerungseinrichtung die Ausführung eines Verfahrens nach einem der Ansprüche 1 bis 10 veranlassen.

13. Werkzeugmaschine, umfassend mindestens erste und zweite unterschiedliche Werkzeuge zur Bearbeitung eines Werkstückes, insbesondere eines Profilträgers, und eine Steuerungseinrichtung nach Anspruch 11 zur Steuerung der Bearbeitung des Werkstückes durch die Werkzeugmaschine.

14. Werkzeugmaschine nach Anspruch 13, wobei die ersten und zweiten Werkzeuge an unterschiedlichen Bearbeitungseinrichtungen angeordnet sind.

15. Werkzeugmaschine nach Anspruch 13 oder 14, wobei die ersten und zweiten Werkzeuge, und insbesondere die Bearbeitungseinrichtungen relativ zueinander beweglich sind.
